# EUROPEAN PATENT SPECIFICATION

(11) **EP 3 320 039 B1**
(45) Date of publication and mention of the grant of the patent: **18.12.2019**
(21) Application number: 16742108.0
(22) Date of filing: 07.07.2016
(51) Int. Cl.: C08L 7/00, F16G 1/00

(54) **RUBBER COMPOSITION AND RUBBER PRODUCTS USING SAME**
KAUTSCHUKZUSAMMENSETZUNG AND KAUTSCHUKPRODUKTE DIESE VERWENDEND
COMPOSITION DE CAOUTCHOUC ET PRODUITS DE CAOUTCHOUC UTILISANT CELLE-CI

(30) Priority: 10.07.2015 US 201514796592
(43) Date of publication of application: 16.05.2018
(73) Proprietor: Gates Corporation, Denver, CO 80202 (US)
(72) Inventor: FENG, Yuding, Rochester Hills, Michigan 48309 (US); WU, Shawn Xiang, Rochester Hills, Michigan 48307 (US)
(74) Representative: Carpmaels & Ransford LLP
(86) International application number: PCT/US2016/041328
(87) International publication number: WO 2017/011265

(56) References cited:
- US-A1- 2005 202 916
- US-A1- 2013 150 488

## Description

### BACKGROUND OF THE INVENTION

This invention relates generally to a rubber composition useful for rubber products such as belts and hose, more particularly to a composition that is a blend of polyvinylpyrrolidone in an elastomer, reinforced with cellulosic fibers.

Belts for power transmission include V-belts, multi-v-ribbed belts, and synchronous or toothed belts. High-performance, synthetic, short-fiber reinforcements, such as aramid fibers, are often used in the rubber formulations used in such belts. These fibers tend to be expensive and from non-renewable sources, but are considered necessary to meet performance requirements.

### SUMMARY

The present invention is directed to systems and methods which provide elastomeric compositions useful for power transmission belts or hose which utilize environmentally friendly cellulosic reinforcing fibers.

The elastomeric or rubber compositions include an elastomer, polyvinylpyrrolidone, a cellulosic fiber, and a curative.

The elastomer may be one or more selected from ethylene elastomers, nitrile elastomers, and polychloroprene elastomers. The elastomer may be an ethylene-alpha-olefin elastomer.

The polyvinylpyrrolidone may be present in an amount of 5 to 50 parts weight per hundred parts ("PHR") of the elastomer.

The cellulosic fiber may be one or more selected from kenaf, jute, hemp, flax, ramie, sisal, wood, rayon, acetate, triacetate, and cotton. The cellulosic fiber may be a natural fiber or man-made material. The cellulosic fiber may be a bast fiber. The cellulosic fiber is present in an amount of 1 to 50 parts weight per hundred parts of the elastomer.

The invention is also directed to a power transmission belt utilizing the reaction product of the inventive rubber composition. The rubber composition may be vulcanized or cured.

The invention may contribute to providing relatively high value rubber compounds, for example, achieving a relatively high compound modulus with a relatively low-cost fiber from a renewable natural resource.

Embodiments of the invention based on polychloroprene elastomer may exhibit a modulus plateau on cure instead of a marching modulus.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

The accompanying drawings, which are incorporated in and form part of the specification in which like numerals designate like parts, illustrate embodiments of the present invention and together with the description, serve to explain the principles of the invention. In the drawings:
FIG. 1 is a partially fragmented perspective view of a power transmission V-belt according to an embodiment of the invention;
FIG. 2 is a cross-section view of a power transmission V-ribbed belt according to an embodiment of the invention; and
FIG. 3 is a partially fragmented perspective view of a toothed power transmission belt according to an embodiment of the invention.

### DETAILED DESCRIPTION

The invention is directed to rubber compositions useful for dynamic products such as power transmission belts or hose. The rubber compositions have a base elastomer blended with polyvinylpyrrolidone (PVP) and have a cellulosic fiber component.

The term "rubber" refers to a material capable of recovering from large deformations quickly and forcibly (i.e., is "elastomeric"), and which is essentially insoluble in boiling solvents (due the presence of covalent crosslinks). Other useful definitions may be found in ASTM D-1566, which is hereby incorporated herein by reference. "Elastomer" refers to an elastomeric polymer, which when crosslinked may form a rubber.

Rubber or elastomeric "composition" or "formulation" refers to the combination of raw materials used to make a rubber material. Rubber "compound" refers to the mixture of the materials in a rubber composition after mixing but before curing or vulcanization. Rubber compositions may include a number of additional ingredients besides the elastomer(s), such as curatives, fillers, extenders, softeners, anti-degradants, colorants, process aids, curatives, accelerators, retardants, coagents, flame retardants, and the like. "Base elastomer" refers to the elastomeric polymer used in the rubber composition, and it may be a blend of elastomers.

The inventive rubber may be based on any suitable base elastomer, but exemplary elastomers are natural rubber, polychloroprene (CR), polyisoprene, styrenebutadiene rubber, ethylene elastomers, nitrile elastomers, polyurethane elastomers, and the like. Ethylene elastomers include ethylene-vinylacetate elastomer, ethylene acrylic elastomers, and ethylene-alpha-olefin elastomers. Nitrile elastomers include acrylonitrile-butadiene rubber (NBR), hydrogenated nitrile (HNBR), carboxylated NBR and HNBR, and the like. The invention is particularly advantageous when the exemplary rubber compositions are based on non-polar elastomers such as the ethylene-alpha-olefin elastomers, such as ethylene propylene diene elastomer (EPDM), ethylene propylene elastomer (EPM), ethylene octene elastomers (EOM), ethylene butene elastomer (EBM), and the like. The rubber compositions may also be based on blends of two or more elastomers.

The inventive rubber is based on a blend of a base elastomer and polyvinylpyrrolidone as the polymeric matrix in which all other ingredients are mixed. Polyvinylpyrrolidone (PVP) is a white, hygroscopic powder with a weak characteristic odor. In contrast to most polymers, it is readily soluble in water and a large number of organic solvents, such as alcohols, amines, acids, chlorinated hydrocarbons, amides and lactams. On the other hand, the polymer is insoluble in the common esters, ethers, hydrocarbons and ketones. The hygroscopic property combined with outstanding film formation, initial tack and adhesion to different materials, high capacity for complex formation, good stabilizing and solubilizing capacity, insensitivity to pH changes, ready radiation-induced crosslinkability as well as good biological compatibility have made PVP a frequently used specialty polymer especially in solutions, emulsions, coatings, and films.

PVP is synthesized by free-radical polymerization of N-vinylpyrrolidone in water or alcohols with a suitable initiator and method of termination. By selecting suitable polymerization conditions, a wide range of molecular weights can be obtained, extending from low values of a few thousand daltons to approximately 2.2 million daltons. Selected comonomers can be incorporated into the PVP polymer during polymerization to modify its properties. Such comonomers include vinylacetate (VA) and N-vinylcaprolactam (VCAP). For example, Luvitec® VA64 contains about 40% of VA comonomer and is less hygroscopic than PVP homopolymer. Table 1 shows weight average and number average molecular weight in Daltons of some commercial PVP homo- and co-polymer grades from BASF sold under the Kollidon® mark and the Luvitec® mark.

**TABLE 1.**

| Grade | Weight Average | Number Average |
|---|---|---|
| Kollidon® 12PF | 2000-3000 | 1300 |
| Kollidon® 17PF | 7000-11000 | 2500 |
| Kollidon® 25 | 28,000-34,000 | 6000 |
| Kollidon® 30 | 44,000-54,000 | 12,000 |
| Kollidon® 90F | 1,000,000-1,500,000 | 360,000 |
| Luvitec® K17 | 9000 | 2000 |
| Luvitec® K30 | 50,000 | 14,000 |
| Luvitec® VA64 | 65,000 | 15,000 |

The present invention is directed to the use of cellulosic fibers, which are naturally occurring plant-derived fibers or man-made fibers with a major component based on cellulose, such as wood, kenaf, jute, hemp, ramie, and flax, in rubber compositions useful for flexible power transmission belts or hose. The bast fibers from the bark section of the plants are of primary interest, although some leaf and seed fibers may also be useful. Other bast fibers include sunn, urena or cadillo, and roselle. Leaf fibers include abaca, cantala, henequen, istle, phromium, sanseviera, and sisal. Useful seed fibers include cotton and kapok. Wood fibers include those derived from hardwood or softwood species. Man-made cellulosic fibers include rayon (regenerated cellulose), viscose, acetate (cellulose acetate), triacetate (cellulose triacetate), and the like.

Kenaf (*Hibiscus cannabinus L*.) is an annual herbaceous plant originally from Africa. It is a newer crop to the United State. Kenaf is mainly cultivated in southern temperate regions such as Mississippi, Texas, California, Louisiana, New Mexico, and Georgia. It has a growing period of 90-150 days and may grow to 2.4-6 m in height. Its single, straight stem consists of an outer fibrous bark and an inner woody core which yields two distinct types of fibers: bast and core fibers respectively. The bast fiber constitutes about 26-35 wt% (weight percentage) of its stem, and genetic strains have been developed which yield 35 wt% or greater bast portions. The harvested kenaf stems are usually first decorticated to separate the bark from the core, producing ribbons of kenaf bast fibers. These ribbons can be retted into fiber bundles or single fibers. It is preferable to harvest the kenaf crop once the fiber has been air-dried (approximately 10% moisture content). Drying may be achieved by leaving the crop standing in the field.

In general, the kenaf bast fibers are hollow tubes averaging 2.6 mm in length, 21 µm in diameter with an average length/diameter aspect ratio of 124, very similar to softwood species. The core fibers, with an average length of 0.5 mm, closely match those of hardwoods.

The major constituents of kenaf bast fiber bundles (KBFB) are cellulose, hemicellulose and lignin. The amount of each constituent can vary significantly due to cultivation environments, geographic origins, age, locations in the plant (from root to tip), and retting and separating techniques. Lloyd E. H. and D. Seber, "Bast fiber applications for composites," (1996), available at http://www.hempology.org/CURRENT%20HISTORY/1996%20HEMP%20COMPOSIT ES.html, reported weight percentages of 60.8 for cellulose, 20.3 for hemicellulose, 11.0 for lignin, 3.2 for extractives, and 4.7 for ash. Mohanty et al, "Biofibres, biodegradable polymers and biocomposites: an overview," Macromolecular materials and engineering, 276-277(1): 1-24 (2000), reported lower cellulose (31-39 wt%) and higher lignin (15-19 wt%) amounts. Rowell et al., "Characterization and factors effecting fiber properties," In: Frollini E, Leão AL, Mattoso LHC, editors. "Natural polymers and agrofibers based composites: preparation, properties and applications," San Carlos, Brazil: L.H.C., Embrapa. pp. 115-134 (2000) reported 44-57 wt% cellulose, and 15-19 wt% lignin. Other sources cite cellulose contents of about 71 to 76% for kenaf, jute, hemp and flax fibers, with lower (≤8%) lignin contents and 13-19% hemicellulose.

Kenaf is a cellulosic source with ecological and economical advantages, abundant, exhibiting low density, nonabrasive during processing, high specific mechanical properties, biodegradable and cheap pricing. Historically, kenaf fiber was first used as cordage. Industry is now exploring the use of kenaf in papermaking and nonwoven textiles. Potential applications of kenaf products include paper pulp, cordage, grass erosion mats, animal bedding, oil sorbents, potting media, animal litter, insulation boards, fillers for plastics, and textiles.

Table 2 compares mechanical properties of kenaf and other cellulosic fibers with some common synthetic fibers. Kenaf, flax, hemp, and jute are bast fibers, while sisal is a leaf fiber and cotton is a seed hair fiber. In terms of tensile strength and elongation, the cellulosic fibers compare quite favorably with nylon and polyester. The outstanding feature of kenaf fiber is its Young's modulus, which is close to that of E-glass fiber and aramid fiber. These cellulosic fibers' tensile strength is not high enough for belt tensile cord applications, but according to an embodiment of the invention, they are suitable for using as a filler to reinforce rubber belt compounds to provide belt shape stabilization or stiffening or cord support.

**TABLE 2.**

| Fiber | Density (g/cc) | Diameter (µm) | Tensile strength (MPa) | Young's Modulus (GPa) | Elongation at break (%) |
|---|---|---|---|---|---|
| Kenaf (bast) | 1.45 | 14-23 | 930 | 53 | 1.6 |
| Flax (bast) | 1.5 | 40-600 | 345-1500 | 27.6 | 2.7-3.2 |
| Hemp (bast) | 1.48 | 13-30 | 810 | | 1-6 |
| Jute (bast) | 1.50 | 15-25 | 350-700 | | 1.5 |
| Sisal (leaf) | 1.5 | | 511-635 | 9.4-22 | 2-3 |
| Cotton (seed hair) | 1.5-1.6 | 12-38 | 287-800 | 5.5-12.6 | 7-8 |
| Nylon (synthetic) | 1.0-1.2 | | 40-90 | 3-5 | 20-60 |
| Polyester | 1.2-1.5 | | 40-90 | 2-4.5 | 12-47 |
| E-glass | 2.55 | <17 | 3400 | 73 | 2.5 |
| Kevlar | 1.44 | | 3000 | 60 | 2.5-3.7 |
| Carbon | 1.78 | 5-7 | 3400-4800 | 240-425 | 1.4-1.8 |

Preferred bast fibers, including kenaf fibers, for practicing the present invention are the longer bast fibers from bark, separated from the shorter core fibers, and chopped to a useful length for use in belt compositions. Suitable fiber lengths may be in the range from 0.5 to 5 mm, or from 1 to 4 mm, or 1 to 3 mm or 2 to 3 mm. Preferred loadings will depend on the amount of reinforcement desired, but may advantageously be in the range of 0.5 to 50 parts weight per hundred parts of the base elastomer (PHR), or from 1 to 30 PHR. Suitable fibers may be obtained, for example, from Procotex Corporation SA, Kenactiv Innovations, Inc., or International Fiber Corporation.

Flax fiber (*Linum usitatissimum* L.) comes from the annual plant by that name grown in temperate, moist climates. Harvesting and processing of the flax bast fibers is similar to Kenaf. Boiled and bleached flax may contain over 95% cellulose. Suitable fibers may be obtained for example from Procotex Corporation SA.

Hemp fiber comes from the plant *Cannabis sativa* which originated in China, but is now grown in Asia and Europe as well.

Jute comes from two plants, *Corchorus capsularis* and *C*. *olitorius.* It is grown mainly in India, Bangladesh, Burma, Nepal, and Brazil. Kenaf and jute contain lignocellulose, which contributes to their stiffness. Roselle is derived from *H. Sabdarifa*, which is closely related to kenaf.

Ramie bast fiber comes from the bark of *Boehmeira nivea.* Because of the high gum content, it cannot be retted like kenaf. Instead, the fibers are separated by boiling in alkaline solution, followed by washing, bleaching, neutralizing, and drying. Thus degummed ramie may contain over 95% cellulose. Such chemical treatments may also be used to prepare other types of fibers, and may include enzyme treatments.

Sisal is obtained from *Agave sisalana* and is the most commercially important of the leaf fibers.

A number of other plant fibers have been studied for possible use in composites. To the extent they are cellulosic and have suitable physical and dimensional properties, they may also be useful in rubber compositions. Among these others are banana plant fibers, pineapple, palm, bamboo, and the like.

Wood fiber (also known as cellulose fiber or wood pulp or just "pulp") can be obtained from any number of wood species, both hardwood and softwood. The fibers may be separated by any of the known pulping processes to obtain suitable fibers for reinforcing rubber compositions. Recycled pulp may be used.

The cellulosic fibers may be used in the elastomer-PVP blend composition as the only fiber reinforcement, or other types of fibers may be included in addition. For example, some additional fibers such as aramid, polyamide, polyester, carbon glass or the like may be blended with the cellulosic fibers in the composition.

Mixing may be carried out using any conventional or known mixing equipment including internal batch mixers, open roll mills, compounding extruders, or the like. Likewise the compositions may be shaped, formed, cured or vulcanized using any conventional or known method or equipment.

The inventive rubber compounds may be used in power transmission belts such as V-belts, toothed or synchronous belts, and multi-v-ribbed belts, as well as in hose or other suitable rubber products.

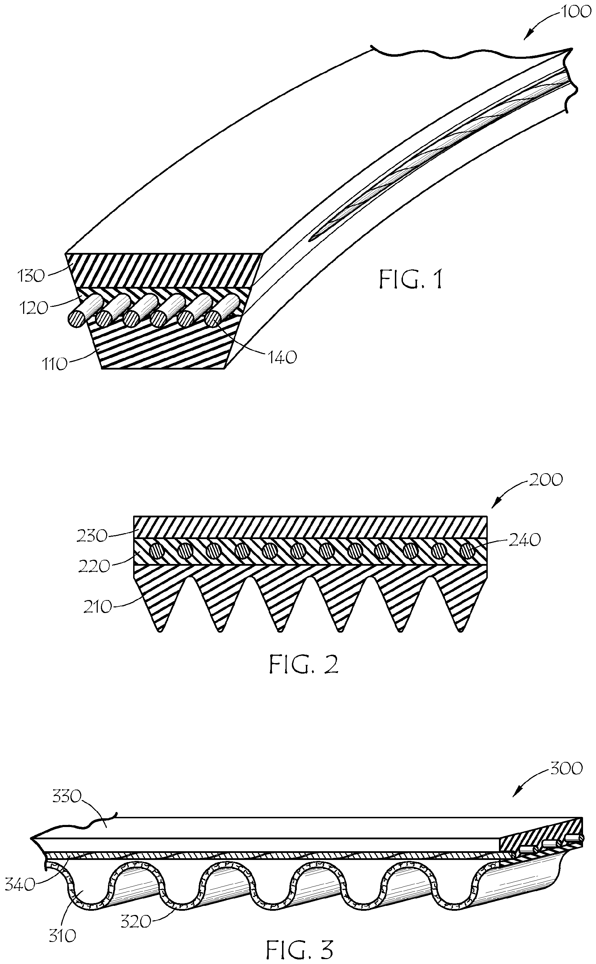

FIG. 1 shows a power transmission belt embodiment of the invention in the form of a V-belt proportioned for a variable-speed drive. V-belt 100 has a generally isosceles trapezoidal cross section, with tension or overcord layer 130 on the back-, upper-, outer- or top-side, and compression or undercord layer 110 on the bottom-, lower-, or inner-side, with adhesive layer 120 in between and helically wound tensile cord 140 embedded therein. The lateral sides are the pulley contact surfaces which define the V-shape. The layers of the belt body, including adhesion layer 120, overcord layer 130, and undercord layer 110, are generally vulcanized rubber compositions, and they may be different formulations from each other or the same formulation. The V-belt may include cogs or notches on the back side, inside or both. Fabric may also be used on a surface or within the belt. The cord may be any known high modulus, fatigue resistant, twisted or cabled bundle of polyamide, polyester, aramid, carbon, polybenzobisoxazole, boron, or glass, fibers or yarns, or hybrids thereof, and may be treated with an adhesive, or the like. An embodiment of the inventive rubber composition containing an elastomer, PVP, and cellulosic fibers may be utilized in any one or more of the elastomer layers used within a given belt construction. One or more layers may include dispersed short fibers oriented in the transverse direction to increase transverse stiffness of the belt body while maintaining longitudinal flexibility.

FIG. 2 shows a cross-section of a power transmission belt embodiment of the invention in the form of a V-ribbed belt. V-ribbed belt 200 has tension or overcord layer 230 on the back-side, and compression or undercord layer 210 on the bottom-side, with adhesive layer 220 in between and helically wound tensile cord 240 embedded therein. The V-shaped ribs are the pulley contact surfaces. The layers of the belt body, including adhesion layer 220, overcord layer 230, and undercord layer 210, are generally vulcanized rubber compositions, and they may be different formulations from each other or the same formulation. Fabric may also be used on a surface or within the belt. The cord may be as described for the V-belt above. An embodiment of the inventive rubber composition containing an elastomer, PVP, and cellulosic fibers may be utilized in any one or more of the elastomer layers used within a given belt construction. One or more layers may include dispersed short fibers oriented in the transverse direction to increase transverse stiffness of the belt body while maintaining longitudinal flexibility.

FIG. 3 shows a power transmission belt embodiment of the invention in the form of a synchronous or toothed belt. Toothed belt 300 has tension or overcord layer 330 on the back-side, and tooth-rubber 310 in the teeth, with tooth fabric 320 covering the teeth and helically wound tensile cord 340 embedded in the belt. The teeth are the pulley contact surfaces. The rubber layers of the belt body, including tooth rubber 310 and overcord layer 330, are generally vulcanized rubber compositions, and they may be different formulations from each other or the same formulation. The cord may be as described for the V-belt above. An embodiment of the inventive rubber composition containing an elastomer, PVP, and cellulosic fibers may be utilized in any one or more of the elastomer layers used within a given belt construction. One or more layers may include dispersed short fibers which may also be oriented in an advantageous way.

Likewise, a hose embodiment (not shown) may include one or more rubber layers, any of which may be based on the inventive rubber composition. A hose may also include textile reinforcement layer(s) or adhesive layer(s).

### Examples:

In a first series of rubber compound examples, the effect of adding PVP to an EPDM composition with kenaf or flax cellulosic fibers was studied. The compositions listed in Table 3 were mixed in conventional rubber compounding equipment, i.e., an internal mixer followed by milling and calendering. Comparative examples are indicated with "Comp. Ex." and inventive examples as "Ex."

Compound physical properties were tested using standard rubber testing methods. Tensile strength, ultimate elongation and modulus were determined in the with-grain ("WG") and cross-grain ("XG") direction using common tensile test methods, in accordance with ASTM D-412 (die C, and using 6"/min. crosshead speed). "Modulus" herein refers to tensile stress at given elongation (eg., 5% or 10%) as defined in ASTM D-1566 and ASTM D-412. Rubber hardness was tested with a type-A durometer according to ASTM D-2240. Tear strength was tested according to ASTM D-624, die-C, in with-grain and cross-grain directions. Compound elastic modulus (G') was evaluated according to ASTM D-6204 on the RPA2000 tester at 6.98% strain, 1.667 Hz, after curing the composition in the tester.

The measurement results are shown in Table 4. It was found that the addition of PVP into the EPDM compounds having cellulosic fibers increased the compound elastic modulus (G'), tensile strength, tensile modulus and tear strength. For example, a comparison of Comp. Ex. 2 with Ex. 3 and Ex. 4, or alternately with Ex. 5 and Ex. 6, shows increasing physical properties with increasing levels of PVP for Kenaf-filled rubber. Likewise, a comparison of Comp. Ex. 2 with Ex. 3 and Ex. 4, or alternately with Ex. 5 and Ex. 6, shows increasing physical properties with increasing levels of PVP for Kenaf-filled rubber. Without intending to be limited, these results are believed to indicate that the compatibility between the cellulosic fiber and the non-polar EPDM rubber matrix was improved by the addition of the polar PVP. The results also show that cellulosic fibers, with the PVP-modified EPDM elastomer, can be a viable replacement for at least a portion of the state-of-the-art high-performance chopped aramid fibers in Comp. Ex. 1. Thus, Ex. 3-8 have comparable or better physical properties than Comp. Ex. 1.

**TABLE 3.**

| Parts by weight | Comp. Ex. 1 | Comp. Ex. 2 | Ex. 3 | Ex. 4 | Ex. 5 | Ex.6 | Ex.7 | Ex.8 |
|---|---|---|---|---|---|---|---|---|
| EPDM | 100 | 100 | 100 | 100 | 100 | 100 | 100 | 100 |
| PVP¹ | - | - | 4. | 8. | - | - | 8. | - |
| PVP² | - | - | - | - | 4. | 8. | - | 8. |
| Fillers | 88.1 | 88.1 | 88.1 | 88.1 | 88.1 | 88.1 | 88.1 | 88.1 |
| Paraffin Oil | 9.4 | 9.4 | 9.4 | 9.4 | 9.4 | 9.4 | 9.4 | 9.4 |
| Other | 18.6 | 18.6 | 18.6 | 18.6 | 18.6 | 18.6 | 18.6 | 18.6 |
| 1-mm aramid fiber | 18 | 10 | 10 | 10 | 10 | 10 | 10 | 10 |
| 2-mm Kenaf fiber | - | 15 | 15 | 15 | 15 | 15 | - | - |
| 2-mm Flax fiber | - | - | - | - | - | - | 15 | 15 |
| Cure package | 6.3 | 6.3 | 6.3 | 6.3 | 6.3 | 6.3 | 6.3 | 6.3 |

| | | | | | | | | |
|---|---|---|---|---|---|---|---|---|
| ¹Luvitec K17. ²Luvitec VA64. | | | | | | | | |

Two comparable compositions in Table 3 were tested in V-belts, Comp. Ex. 1 and Ex. 6, in Comp. Belt A and Ex. Belt B, respectively. The V-belts were constructed as shown in FIG. 1, with the overcord and undercord both made of the respective example compound. The belt pitch length was 45 inches, overall thickness 0.55 inches, top width 1.25 inches, and V included angle 24°. A different adhesion layer composition was used, but the same in both belt constructions. The same cord was used in both belt constructions. The belts were tested on a durability test designed to test CVT belts in a high-load, under-drive situation. The tester was thus a two-pulley rig with 26° sheaves, with driver sheave having 5-inch pitch diameter and running at 2000 rpm, the driven sheave having 7.6-inch pitch diameter and running at 1257 rpm, and a torque load of 1003 lb.in. (20 HP). The Durability test results are shown in Table 5. The three control belts tested, Comp. Belt A, exhibited lives of 216, 506 and 332 hours, respectively. The three inventive belts tested, Ex. Belt B, exhibited a belt life of 348, 378, and 358 hours, giving a comparable average to the control. Thus, the comparable physical properties of these two rubber compositions, indicate comparable belt life, at least on this test.

**TABLE 4.**

| Test | Comp. Ex. 1 | Comp. Ex. 2 | Ex. 3 | Ex. 4 | Ex. 5 | Ex. 6 | Ex. 7 | Ex. 8 |
|---|---|---|---|---|---|---|---|---|
| Hardness (ShA) | 90 | 92 | 91 | 92 | 91 | 93 | 94 | 95 |
| Tensile strength (WG) (psi) | 3594 | 3360 | 3664 | 3720 | 3803 | 3830 | 3985 | 3886 |
| Elongation% (WG) | 11 | 12 | 14 | 10 | 14 | 12 | 13 | 10 |
| M5% (WG) (psi) | 2859 | 2418 | 2576 | 2657 | 2542 | 2749 | 2905 | 2952 |
| M10% (WG) (psi) | 2985 | 3137 | 3425 | 3670 | 3245 | 3446 | 3134 | 2931 |
| Tensile strength (XG) (psi) | 1689 | 1415 | 1789 | 1701 | 1820 | 1755 | 1883 | 1879 |
| Elongation % (XG) | 69 | 52 | 64 | 43 | 64 | 51 | 61 | 63 |
| M5% (XG) (psi) | 470 | 358 | 385 | 539 | 430 | 476 | 453 | 459 |
| M10% (XG) (psi) | 795 | 591 | 622 | 842 | 688 | 751 | 712 | 699 |
| M20% (XG) (psi) | 1225 | 952 | 1015 | 1265 | 1091 | 1166 | 1112 | 1087 |
| Tear strength-(WG)(ppi) | 357 | 301 | 334 | 355 | 334 | 344 | 363 | 352 |
| Tear strength- (XG) (ppi) | 203 | 173 | 178 | 202 | 168 | 189 | 204 | 189 |
| Tear strength- aged (WG) (ppi)² | 350 | 307 | 332 | 381 | 323 | 362 | 361 | 366 |
| Tear strength- aged (XG) (kN/m)² | 189 | 174 | 164 | 202 | 177 | 194 | 188 | 189 |
| RPA G' (100°C)¹ | 6510 | 7054 | 7575 | 7952 | 6731 | 8435 | 8268 | 8195 |
| RPA G' (80°C)¹ | 6402 | 6922 | 7598 | 7994 | 6851 | 8545 | 8470 | 8350 |
| RPA G' (66°C)¹ | 6428 | 6924 | 7737 | 8110 | 6978 | 8632 | 8653 | 8577 |

| | | | | | | | | |
|---|---|---|---|---|---|---|---|---|
| ¹RPA elastic modulus measured at 6.98% strain, 1.667 Hz (kPa). ² Aged in hot air oven, 70 hrs at 120°C. | | | | | | | | |

The same two compositions were also used to construct some V-belts with standard BX section V-belt dimensions, i.e., 34° V-angle, 21/32" top width, and 13/32" overall thickness, labeled Comp. Belt C and Ex. Belt D. These belts were then tested on a V-belt Durability test, a V-belt Backside flex test, and a V-belt Misalignment test. The Durability test includes 1:1 drive with 4.5" pitch diameter, 34° sheaves run at 1770 rpm with 10 HP load. The Backside flex test is similar but run at zero load, 3600 rpm, 50-lb total tension, and with a 5" OD flat backside idler in a span. The Misalignment test uses the same setup as the Durability test, but the driven sheave is shifted out of alignment by 1°. The results of these three tests, also shown in Table 5, indicate comparable performance between the inventive belt and the control. Again, these belt results indicate that natural cellulosic fibers may be a suitable replacement for some or all of the chopped aramid fibers often found in high-performance V-belts.

**TABLE 5.**

| Belt Type | Belt test¹ | Comp. Belt A (based on Comp. Ex. 1) | Ex. Belt B (based on Ex. 6) |
|---|---|---|---|
| CVT Belt | Durability test life (hrs) | 216/332/506 | 358/378/348 |

| | | Comp. Belt C | Ex. Belt D |
|---|---|---|---|
| V-Belt | Durability test life (hrs) | 564/562 | 472/457/342 |
| | Backside flex life (hrs) | 25/44/49 | 49/28/25 |
| | Misalignment test life (hrs) | 141/73/95 | 119/73/70 |

| | | | |
|---|---|---|---|
| ¹multiple belts were tested and individual lives reported. | | | |

In a second series of rubber compound examples, the effect of adding PVP to a CR composition with kenaf, jute, or flax cellulosic fibers was studied. The compositions listed in Table 6 were mixed as in the first series. The CR measurement results are shown in Table 7. It was found that the addition of PVP into the CR compounds having cellulosic fibers increased the compound elastic modulus (G'), tensile strength, tensile modulus and tear strength. For the most part, the results do not show the same level of improvement in properties as for the EPDM compounds. This is believed to be explainable on the basis of the difference in polarity between EPDM and CR. In particular it is believed that EPDM, being less polar than CR, benefits much more from the addition of a polar polymer such as PVP when it comes to dispersing the cellulosic fibers. Nevertheless there were some notable advantages from the use of PVP blended with CR with cellulosic fibers.

**TABLE 6.**

| | Comp Ex. 9 | Ex. 10 | Ex. 11 | Comp. Ex. 12 | Ex. 13 | Ex. 14 | Comp. Ex. 15 | Ex. 16 | Ex. 17 |
|---|---|---|---|---|---|---|---|---|---|
| CR | 100 | 100 | 100 | 100 | 100 | 100 | 100 | 100 | 100 |
| Kollidon 12 PF | - | 8 | - | - | 8 | - | - | 8 | - |
| Kollidon 17 PF | - | - | 8 | - | - | 8 | - | - | 8 |
| Kenaf | 37.2 | 37.2 | 37.2 | - | - | - | - | - | - |
| Jute | - | - | - | 37.2 | 37.2 | 37.2 | - | - | - |
| Flax | - | - | - | - | - | - | 37.2 | 37.2 | 37.2 |
| Fillers¹ | 74 | 74 | 74 | 74 | 74 | 74 | 74 | 74 | 74 |
| Other Additives² | 18.2 | 18.2 | 18.2 | 18.2 | 18.2 | 18.2 | 18.2 | 18.2 | 18.2 |
| Cure package | 8.1 | 8.1 | 8.1 | 8.1 | 8.1 | 8.1 | 8.1 | 8.1 | 8.1 |

| | | | | | | | | | |
|---|---|---|---|---|---|---|---|---|---|
| ¹ carbon black, silica, etc. ² anti-degradant, plasticizer, ZnO, process aid, etc. | | | | | | | | | |

A first advantage to note is that the usual marching modulus of CR disappears, replaced by a nice cure plateau in the MDR cure results of Table 7. This is indicated by the much shorter t90 result (time to 90% of full cure). In control compounds study, Comp. Ex. 9, 13 and 16, t90 is near the end of the 30 minute test because of the gradual, continual increase in modulus. But the Examples in Table 7 plateau, giving a much shorter t90. This effect could be advantageous, depending on the application. Depending on the degree of cure desired, the cure system may need adjustment to match the cure state of a PVP/CR blend rubber to a CR control rubber.

A second notable result is a significant improvement in elongation for the flax examples when PVP is added, as in Ex. 16 and 17, relative to the Comp. Ex. 15 with no PVP. This also seems to correlate with an improvement in modulus and in tear strength ("C-Tear") for the same flax-filled compounds.

**TABLE 7.**

| | Comp Ex. 9 | Ex. 10 | Ex. 11 | Comp. Ex. 12 | Ex. 13 | Ex. 14 | Comp. Ex. 15 | Ex. 16 | Ex. 17 |
|---|---|---|---|---|---|---|---|---|---|
| t90 (min.)¹ | 19.5 | 8.2 | 8.6 | 18.0 | 7.4 | 8.9 | 16.0 | 7.7 | 8.1 |
| (MH - ML) (lb.-in.)¹ | 35.0 | 30.3 | 30.5 | 31.9 | 25.1 | 28.0 | 36.5 | 26.5 | 30.7 |
| Tensile strength (WG) (psi) | 1636 | 1500 | 1430 | 1631 | 1270 | 1318 | 2291 | 1261 | 1309 |
| Elongation % (WG) | 171 | 142 | 164 | 135 | 143 | 134 | 19 | 62 | 138 |
| 5% Mod. (WG)(psi) | 717 | 771 | 824 | 834 | 1013 | 1099 | 985 | 1152 | 1555 |
| 10% Mod. (WG) (psi) | 1020 | 915 | 945 | 936 | 1121 | 1531 | 1146 | 1257 | 2198 |
| 20% Mod. (WG) (psi) | 1217 | 969 | 972 | 954 | 1096 | 1630 | - | 1221 | 1726 |
| Tensile strength (XG) (psi) | 1185 | 1012 | 971 | 965 | 745 | 942 | 1174 | 870 | 973 |
| Elongation % (XG) | 149 | 131 | 127 | 92 | 88 | 136 | 79 | 114 | 129 |
| 5% Mod. (XG) (psi) | 247 | 414 | 526 | 376 | 442 | 479 | 410 | 516 | 446 |
| 10% Mod. (XG) (psi) | 370 | 516 | 628 | 551 | 550 | 567 | 627 | 631 | 561 |
| 20% Mod. (XG) (psi) | 541 | 580 | 670 | 751 | 600 | 607 | 914 | 678 | 636 |
| C-Tear (WG)(ppi) | 268 | 238 | 255 | 260 | 240 | 252 | 262 | 264 | 285 |
| C-Tear (XG)(ppi) | 171 | 157 | 150 | 147 | 147 | 173 | 161 | 166 | 178 |
| aged C-Tear (WG)(ppi) | 246 | 259 | 271 | 252 | 279 | 256 | 277 | 285 | 293 |
| aged C-Tear (XG)(ppi) | 132 | 163 | 174 | 142 | 157 | 167 | 147 | 180 | 184 |
| G' at 100°C (kPa)² | 4779 | 6317 | 6558 | 6497 | 6108 | 6202 | 7668 | 6543 | 7141 |
| G' at 80°C(kPa)² | 5161 | 6671 | 6975 | 7010 | 6677 | 6648 | 8316 | 7251 | 7382 |
| G' at 66°C(kPa)² | 5512 | 6940 | 7463 | 7434 | 7254 | 7128 | 8879 | 7913 | 7512 |

| | | | | | | | | | |
|---|---|---|---|---|---|---|---|---|---|
| ¹ MDR, 30 min @ 160°C ² RPA2000, 6.98% strain, 1.667 Hz. | | | | | | | | | |

Thus, rubber compositions a according to various embodiments of the invention may be useful in belts, hose, and other dynamic rubber articles. These compounds utilize "green" reinforcing fibers, i.e., derived from natural, renewable resources and biodegradable.

Although the present invention and its advantages have been described in detail, it should be understood that various changes, substitutions, and alterations can be made herein without departing from the scope of the invention as defined by the appended claims. Moreover, the scope of the present application is not intended to be limited to the particular embodiments of the process, machine, manufacture, composition of matter, means, methods, and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps. The invention disclosed herein may suitably be practiced in the absence of any element that is not specifically disclosed herein.

## Claims

1. A rubber composition comprising a base elastomer, polyvinylpyrrolidone, a cellulosic fiber, and a curative.

2. The rubber composition of claim 1 wherein the base elastomer is one or more selected from the group consisting of ethylene elastomers, nitrile elastomers, and polychloroprene elastomer.

3. The rubber composition of claim 1 wherein the base elastomer is an ethylene-alpha-olefin elastomer.

4. The rubber composition of claim 1 wherein the base elastomer is a polychloroprene elastomer.

5. The rubber composition of claim 1 wherein the cellulosic fiber is one or more natural fiber selected from the group consisting of kenaf, jute, hemp, flax, ramie, sisal, wood and cotton.

6. The rubber composition of claim 1 wherein the cellulosic fiber is one or more selected from the group consisting of kenaf, jute, hemp, and flax.

7. The rubber composition of claim 1 wherein the cellulosic fiber is one or more bast fiber selected from the group consisting of kenaf, jute, hemp, flax, and ramie.

8. The rubber composition of claim 1 wherein the cellulosic fiber is one or more bast fiber selected from the group consisting of kenaf, jute, and flax.

9. The rubber composition of claim 1 wherein the cellulosic fiber is a man-made material.

10. The rubber composition of claim 1 wherein the cellulosic fiber is present in an amount of 1 to 50 parts weight per hundred parts of the base elastomer.

11. The rubber composition of claim 1 after having been vulcanized or cured.

12. The rubber composition of claim 1, wherein the base elastomer is an ethylene-alpha-olefin elastomer, and the cellulosic fiber is a cellulosic bast fiber selected from the group consisting of flax, jute and kenaf.

13. The rubber composition of claim 1 wherein the polyvinylpyrrolidone is present in an amount of 5 to 50 parts weight per hundred parts of the base elastomer, or, the rubber composition of claim 12 wherein the polyvinylpyrrolidone is present in an amount of 5 to 50 parts weight per hundred parts of the elastomer.

14. The rubber composition of claim 13 wherein the cellulosic fiber is present in an amount of 1 to 50 parts weight per hundred parts of the elastomer.

15. A power transmission belt comprising the reaction product of the rubber composition of any preceding claim.

## Patentansprüche

1. Kautschukzusammensetzung, umfassend ein Grundelastomer, Polyvinylpyrrolidon, Cellulosefasern und einen Härter.

2. Kautschukzusammensetzung gemäß Anspruch 1, wobei das Grundelastomer eines oder mehrere ausgewählt aus der Gruppe bestehend aus Ethylenelastomeren, Nitrilelastomeren und Polychloroprenelastomer ist.

3. Kautschukzusammensetzung gemäß Anspruch 1, wobei das Grundelastomer ein Ethylen-alpha-olefin-Elastomer ist.

4. Kautschukzusammensetzung gemäß Anspruch 1, wobei das Grundelastomer ein Polychloroprenelastomer ist.

5. Kautschukzusammensetzung gemäß Anspruch 1, wobei die Cellulosefasern eine oder mehrere natürliche Fasern ausgewählt aus der Gruppe bestehend aus Kenaf, Jute, Hanf, Flachs, Ramie, Sisal, Holz und Baumwolle sind.

6. Kautschukzusammensetzung gemäß Anspruch 1, wobei die Cellulosefasern eines oder mehrere ausgewählt aus der Gruppe bestehend aus Kenaf, Jute, Hanf und Flachs sind.

7. Kautschukzusammensetzung gemäß Anspruch 1, wobei die Cellulosefasern eine oder mehrere Bastfasern ausgewählt aus der Gruppe bestehend aus Kenaf, Jute, Hanf, Flachs und Ramie sind.

8. Kautschukzusammensetzung gemäß Anspruch 1, wobei die Cellulosefasern eine oder mehrere Bastfasern ausgewählt aus der Gruppe bestehend aus Kenaf, Jute und Flachs sind.

9. Kautschukzusammensetzung gemäß Anspruch 1, wobei die Cellulosefasern ein künstliches Material sind.

10. Kautschukzusammensetzung gemäß Anspruch 1, wobei die Cellulosefasern in einer Menge von 1 bis 50 Gewichtsteilen pro hundert Teile des Grundelastomers vorhanden sind.

11. Kautschukzusammensetzung gemäß Anspruch 1 nachdem sie vulkanisiert oder gehärtet worden ist.

12. Kautschukzusammensetzung gemäß Anspruch 1, wobei das Grundelastomer ein Ethylen-alpha-olefin-Elastomer ist und die Cellulosefasern Cellulose-Bastfasern ausgewählt aus der Gruppe bestehend aus Flachs, Jute und Kenaf sind.

13. Kautschukzusammensetzung gemäß Anspruch 1, wobei das Polyvinylpyrrolidon in einer Menge von 5 bis 50 Gewichtsteilen pro hundert Teile des Grundelastomers vorhanden ist, oder Kautschukzusammensetzung gemäß Anspruch 12, wobei das Polyvinylpyrrolidon in einer Menge von 5 bis 50 Gewichtsteilen pro hundert Teile des Elastomers vorhanden ist.

14. Kautschukzusammensetzung gemäß Anspruch 13, wobei die Cellulosefasern in einer Menge von 1 bis 50 Gewichtsteilen pro hundert Teile des Elastomers vorhanden ist.

15. Kraftübertragungsriemen, umfassend das Reaktionsprodukt der Kautschukzusammensetzung gemäß einem der vorstehenden Ansprüche.

## Revendications

1. Composition de caoutchouc comprenant un élastomère de base, de la polyvinylpyrrolidone, une fibre cellulosique, et un durcisseur.

2. Composition de caoutchouc selon la revendication 1, dans laquelle l'élastomère de base consiste en un ou plusieurs éléments sélectionnés dans le groupe constitué d'élastomères d'éthylène, d'élastomères de nitrile et d'un élastomère de polychloroprène.

3. Composition de caoutchouc selon la revendication 1, dans laquelle l'élastomère de base est un élastomère d'éthylène-alpha-oléfine.

4. Composition de caoutchouc selon la revendication 1, dans laquelle l'élastomère de base est un élastomère de polychloroprène.

5. Composition de caoutchouc selon la revendication 1, dans laquelle la fibre cellulosique consiste en une ou plusieurs fibres naturelles sélectionnées dans le groupe constitué du kénaf, de la jute, du chanvre, du lin, de la ramie, du sisal, du bois et du coton.

6. Composition de caoutchouc selon la revendication 1, dans laquelle la fibre cellulosique consiste en un ou plusieurs éléments sélectionnés dans le groupe constitué du kénaf, de la jute, du chanvre et du lin.

7. Composition de caoutchouc selon la revendication 1, dans laquelle la fibre cellulosique consiste en une ou plusieurs fibres libériennes sélectionnées dans le groupe constitué du kénaf, de la jute, du chanvre, du lin et de la ramie.

8. Composition de caoutchouc selon la revendication 1, dans laquelle la fibre cellulosique consiste en une ou plusieurs fibres libériennes sélectionnées dans le groupe constitué du kénaf, de la jute et du lin.

9. Composition de caoutchouc selon la revendication 1, dans laquelle la fibre cellulosique est une matière synthétique.

10. Composition de caoutchouc selon la revendication 1, dans laquelle la fibre cellulosique est présente dans une quantité de 1 à 50 parties en poids par cent parties de l'élastomère de base.

11. Composition de caoutchouc selon la revendication 1, laquelle a été vulcanisée ou durcie.

12. Composition de caoutchouc selon la revendication 1, dans laquelle l'élastomère de base est un élastomère d'éthylène-alpha-oléfine, et la fibre cellulosique est une fibre libérienne cellulosique sélectionnée dans le groupe constitué du lin, de la jute et du kénaf.

13. Composition de caoutchouc selon la revendication 1, dans laquelle la polyvinylpyrrolidone est présente dans une quantité de 5 à 50 parties en poids par cent parties de l'élastomère de base, ou composition de caoutchouc selon la revendication 12, dans laquelle la polyvinylpyrrolidone est présente dans une quantité de 5 à 50 parties en poids par cent parties de l'élastomère.

14. Composition de caoutchouc selon la revendication 13, dans laquelle la fibre cellulosique est présente dans une quantité de 1 à 50 parties en poids par cent parties de l'élastomère.

15. Courroie de transmission d'énergie comprenant le produit réactionnel de la composition de caoutchouc selon l'une quelconque des revendications précédentes.
